# EUROPEAN PATENT APPLICATION

(11) **EP 4 310 588 A1**
(43) Date of publication of application: **24.01.2024**
(21) Application number: 22792042.8
(22) Date of filing: 21.04.2022
(51) Int. Cl.: G03B 5/04, G03B 17/12, H04N 5/225, H04N 5/232

(54) **IMAGE STABILIZER AND ELECTRONIC DEVICE COMPRISING SAME**

(30) Priority: 23.04.2021 KR 20210053202
(71) Applicant: Samsung Electronics Co., Ltd., Suwon-si, Gyeonggi-do 16677 (KR)
(72) Inventor: MOON, Chanyoung, Suwon-si, Gyeonggi-do 16677 (KR)
(74) Representative: Gulde & Partner
(86) International application number: PCT/KR2022/005712
(87) International publication number: WO 2022/225344

(57) **Abstract**

An electronic device comprises: a camera module; and an image stabilizer for correcting shaking of the camera module, wherein the image stabilizer comprises: a lens unit including at least one lens; an actuator capable of driving the lens unit in a first direction and a second direction orthogonal to the first direction; and a housing on which the actuator is seated, wherein the actuator includes: a carrier coupled to the lens unit; a stopper which restricts movement of the carrier in a third direction orthogonal to the first direction and the second direction; and an intermediate guide which restricts movement of the carrier together with the stopper when the actuator moves in the first direction, and moves together with the carrier when the actuator moves in the second direction, wherein in the third direction of the actuator, the stopper, the carrier, and the intermediate guide may be arranged in the order, and the stopper, the carrier, and the intermediate guide may arranged to overlap at least partially.

## Description

### [Technical Field]

Various embodiments of the disclosure relate to an image stabilizer and an electronic device including the same.

### [Background Art]

Various electronic device, such as a smartphone, a tablet PC, a portable multimedia player (PMP), a personal digital assistant (PDA), a laptop PC, a wrist watch, and a head-mounted display (HMD), may include a camera and capture an image by using the camera.

When capturing an image by using a camera included in an electronic device, focus control and/or compensation for shaking of an optical module is required to obtain a clear image.

Types of optical image stabilizers (OIS) used in general cameras include a camera tilting type and a lens shift type.

The lens shift type compensates for shaking of an optical module through linear motion on a plane parallel to the imaging plane of an image sensor.

The camera tilting type moves a camera lens and an image sensor together to make an optical axis match with a virtual axis connecting a subject to the center of a camera module.

### [Disclosure of Invention]

### [Technical Problem]

The present disclosure provides an image stabilizer and an electronic device including the same in which the image stabilizer is reduced in height while maintaining a driving force.

### [Solution to Problem]

An electronic device according to an embodiment of the disclosure may include a camera module, and an image stabilizer configured to compensate for shaking of the camera module. The image stabilizer may include a lens arrangement including at least one lens, an actuator configured to drive the lens arrangement in a first direction and in a second direction orthogonal to the first direction, and a housing in which the actuator is seated. The actuator may include a carrier coupled to the lens arrangement, a stopper configured to limit movement of the carrier in a third direction orthogonal to the first direction and the second direction, and an intermediate guide configured to limit the movement of the carrier together with the stopper when the actuator moves in the first direction, and to move together with the carrier when the actuator moves in the second direction. In the actuator, the stopper, the carrier, and the intermediate guide are disposed in that order in the third direction, and the stopper, the carrier, and the intermediate guide are disposed to at least partially overlap each other.

An image stabilizer according to an embodiment of the disclosure may include a lens arrangement including at least one lens, an actuator configured to drive the lens arrangement in a first direction and in a second direction orthogonal to the first direction, and a housing in which the actuator is seated. The actuator may include a carrier coupled to the lens arrangement, a stopper configured to limit movement of the carrier in a third direction orthogonal to the first direction and the second direction, and an intermediate guide configured to limit the movement of the carrier together with the stopper when the actuator moves in the first direction, and to move together with the carrier when the actuator moves in the second direction. In the actuator, the stopper, the carrier, and the intermediate guide are disposed in that order in the third direction, and the stopper, the carrier, and the intermediate guide are disposed to at least partially overlap each other.

### [Advantageous Effects of Invention]

According to an embodiment of the disclosure, it is possible to structure an image stabilizer and an electronic device including the image stabilizer may be structured by overlapping some areas of the image stabilizer, enabling a slim image stabilizer to be mounted in the electronic device.

### [Brief Description of Drawings]

FIG. 1 is a block diagram of an electronic device according to various embodiments in a network environment.
FIG. 2 is a block diagram illustrating a camera module 180 according to various embodiments.
FIG. 3 is a top plan view of the image stabilizer according to an exemplary embodiment of the disclosure.
FIG. 4 is a cross-sectional view of the image stabilizer of FIG. 3 taken along line A-B.
FIG. 5 is a cross-sectional view of the image stabilizer of FIG. 3 taken along line C-D.
FIG. 6 is a view illustrating the area 401 in FIG. 4 according to an embodiment of the disclosure.
FIG. 7 is a view illustrating the area 401 in FIG. 4 according to an embodiment of the disclosure.
FIG. 8 is a perspective view illustrating an actuator according to an embodiment of the disclosure.
FIG. 9 is a view illustrating a second magnet and an AF carrier according to an embodiment of the disclosure.
FIG. 10 is a view illustrating a carrier and an intermediate guide according to an embodiment of the disclosure.

### [Mode for the Invention]

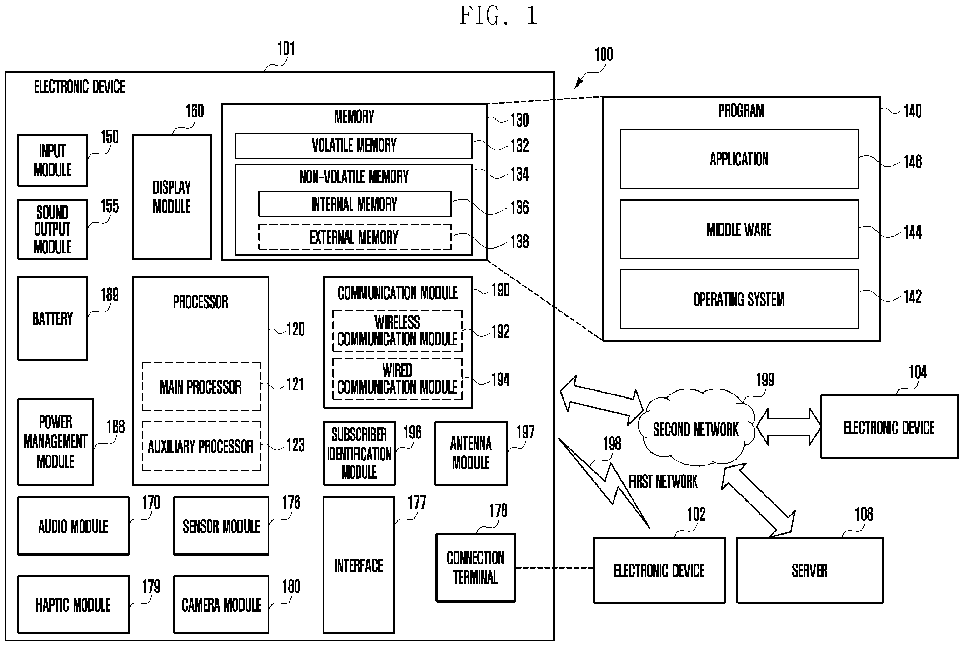

Fig. 1 is a block diagram illustrating an electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adj acent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

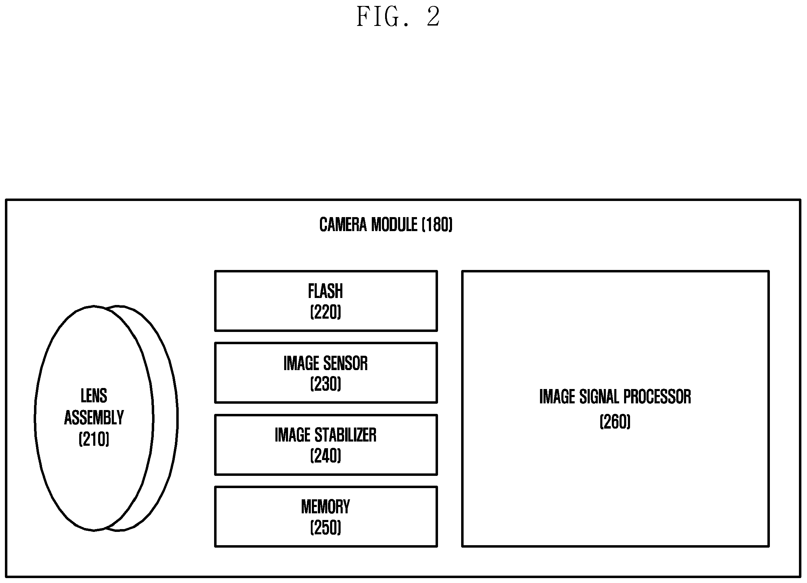

FIG. 2 is a block diagram illustrating a camera module 180 according to various embodiments. Referring to FIG. 2, the camera module 180 may include a lens assembly 210, a flash 220, an image sensor 230, an image stabilizer 240, a memory 250 (e.g., a buffer memory), or an image signal processor 260. The lens assembly 210 may collect light emitted from a subject to be imaged. The lens assembly 210 may include one or more lenses. According to an embodiment, the camera module 180 may include multiple lens assemblies 210. In this case, the camera module 180 may configure, for example, a dual camera, a 360-degree camera, or a spherical camera. Some of multiple lens assemblies 210 may have the same lens properties (e.g., angle of view, focal length, auto-focus, f-number, or optical zoom), or at least one of the lens assemblies may have one or more lens properties different from those of the other lenses. The lens assembly 210 may include, for example, a wide-angle lens or a telephoto lens.

The flash 220 may emit light used to enhance the light emitted or reflected from a subject. According to an embodiment, the flash 220 may include one or more light-emitting diodes (e.g., red-green-blue (RGB) LEDs, white LEDs, infrared LEDs, or ultraviolet LEDs), or a xenon lamp. The image sensor 230 may acquire an image corresponding to a subject by converting light emitted or reflected from the subject and transmitted through the lens assembly 210 into an electrical signal. According to an embodiment, the image sensor 230 may include one image sensor selected from image sensors having different properties, such as an RGB sensor, a black and white (BW) sensor, an IR sensor, or a UV sensor, multiple image sensors having the same properties, or multiple image sensors having different properties. Each image sensor included in the image sensor 230 may be implemented by using, for example, a charge-coupled device (CCD) sensor or a complementary metal oxide semiconductor (CMOS) sensor.

The image stabilizer 240 may move at least one lens included in the lens assembly 210 or the image sensor 230 to a specific direction or may control an operating characteristic of the image sensor 230 (e.g., adjusting read-out timing) in response to the movement of the camera module 180 or the electronic device 101 including the camera module 180. This at least partially compensates for the shaking of the image caused by the movement with respect to a subj ect to be photographed. According to an embodiment, the image stabilizer 240 may detect the movement of the camera module 180 or the electronic device 101 by using a gyro sensor (not illustrated) or an acceleration sensor (not illustrated) disposed inside or outside the camera module 180. The memory 250 may at least temporarily store at least some of the images acquired via the image sensor 230 for the next image processing task. For example, when image acquisition by shutter is delayed or multiple images are acquired at a high speed, the acquired original images (e.g., Bayer-patterned images or high-resolution images) are stored in the memory 250, and copy images (e.g., low-resolution images) corresponding to the original images may be previewed through a display device 160. Then, when predetermined conditions (e.g., a user input or a system command) are satisfied, at least some of the original images that have been stored in the memory 250 may be acquired and processed by, for example, the image signal processor 260. According to an embodiment, the memory 250 may be configured either as at least a portion of the memory 130 or as a separate memory that operates independently.

The image signal processor 260 may perform one or more processes on the images acquired via the image sensor 230 or the images stored in the memory 250. The one or more image processes may include, for example, depth map generation, 3D modeling, panorama generation, feature point extraction, image synthesis, or image compensation (e.g., noise reduction, resolution adjustment, brightness adjustment, blurring, sharpening, or softening). Additionally, or alternatively, the image signal processor 260 may perform control (e.g., exposure time control, or read-out timing control) for at least one of the components (e.g., the image sensor 230) included in the camera module 180. The images processed by the image signal processor 260 may be stored back in the memory 250 for further processing or may be provided to components outside the camera module 180 (e.g., the memory 130, the display module 160, the electronic device 102, the electronic device 104, or the server 108). According to an embodiment, the image signal processor 260 may be configured as at least a portion of the processor 120 or may be configured as a separate processor operated independently of the processor 120. When the image signal processor 260 is configured as a processor separate from the processor 120, the processor 120 may cause at least one image, which is processed by the image signal processor 260, to be displayed through the display device 160 as it is or after further image processing.

According to an embodiment, the electronic device 101 may include multiple camera modules 180, which have different properties (e.g., angle of view) or functions, respectively. In this case, for example, the multiple camera modules 180 may include at least one of a wide-angle camera, a telephoto camera, or an IR camera (a time-of-flight camera or a structured light camera). For example, multiple camera modules including lenses having different angles of view may be provided, and the electronic device may be controlled to change the angle of view by being variable depending to a user's selection. According to an embodiment, for example, at least one of the multiple camera modules 180 may be a front camera, and at least one of the others may be a rear camera.

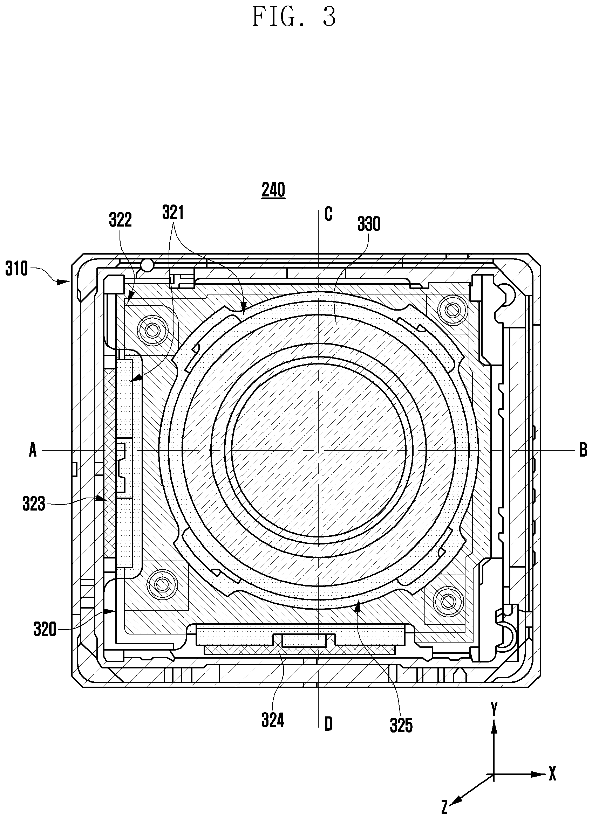

FIG. 3 is a top plan view of the image stabilizer 240 according to an exemplary embodiment of the disclosure.

The image stabilizer 240 may include a housing 310, an actuator 320, and a lens arrangement 330.

The housing 310 may provide a structure in which the actuator 320 and/or the lens arrangement 330 may be coupled or seated. The housing 310 may be coupled to at least a portion of the electronic device 101.

The actuator 320 may include a carrier 321, a stopper 322, a first magnet 323, and/or a second magnet 324.

The carrier 321 may include an opening 325 into which the lens arrangement 330 is capable of being seated. In various embodiments, the carrier 321 and the stopper 322 may include the opening 325 into which the lens arrangement 330 is capable of being seated.

The first magnet 323 and/or the second magnet 324 may be coupled to at least a portion of the carrier 321. The carrier 321 may move in a first direction (the X-axis direction), a second direction (the Y-axis direction), and/or a third direction (the Z-axis direction). The first direction (the X-axis direction) and the second direction (the Y-axis direction) may be orthogonal to each other. The third direction (the Z-axis direction) may be a direction orthogonal to a plane formed by the first direction (the X-axis direction) and the second direction (the Y-axis direction).

When the carrier 321 and/or the lens arrangement 330 move, the stopper 322 may provide a guide for a rotation angle or may restrict rotation and/or movement to prevent the carrier 321 and/or the lens arrangement 330 from breaking away. The lens arrangement 330 may include one or more lenses. The stopper 322 may restrict movement of the carrier 321 in the third direction (the Z-axis direction).

The electromagnetic force of the first magnet 323 and the second magnet 324 may be controlled by a coil included in the housing 310 and/or the carrier 321. The first magnet 323 and the second magnet 324 may be controlled in electromagnetic force by controlling the current flowing through the coil, and may move the actuator 320 by using a Lorentz force generated by the electromagnetic force.

The first magnet 323 and the second magnet 324 are disposed on the X-axis or the Y-axis, respectively, so that the actuator 320 is capable of performing linear motion and diagonal motion in the X-axis and Y-axis.

While the actuator 320 moves, the housing 310 may be fixed to the electronic device 101.

The electronic device 101 may detect the shaking of the camera module 180 by using a sensor (e.g., a gyro sensor or an acceleration sensor) included in a sensor module (e.g., 176 in FIG. 1) disposed inside or outside the camera module 180 under the control of the image signal processor 260 and/or the processor 120.

When the shaking of the camera 180 is detected, the electronic device 101 may move the actuator 320 within a determined movement angle range under the control of the image signal processor 260 and/or the processor 120.

The electronic device 101 may move the actuator 320 in a direction compensating for the shaking of the camera module 180 (e.g., in a direction opposite to the direction of the shaking of the electronic device 101).

The electronic device 101 may capture an image while being minimally affected by shaking by detecting the shaking of the camera module 180 under the control of the image signal processor 260 and/or the processor 120, and moving the actuator 320 depending on the detected shaking.

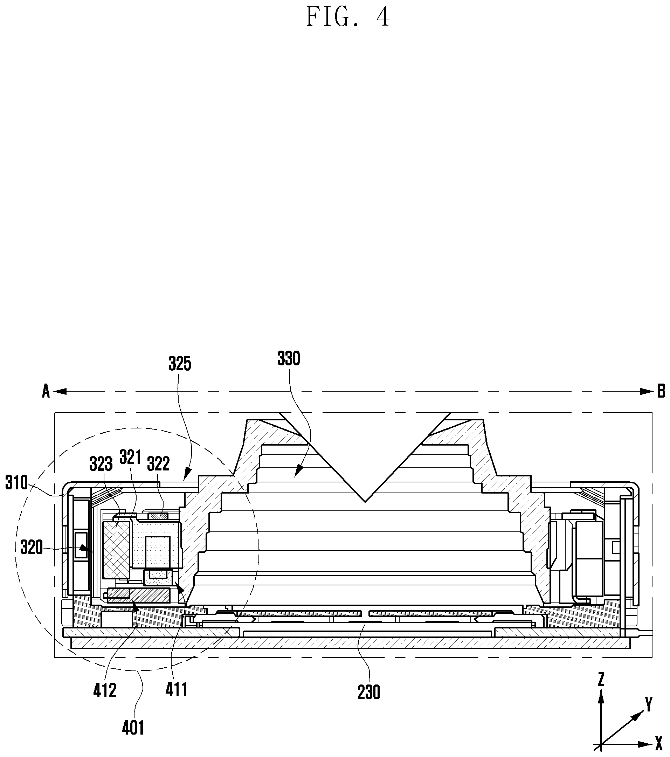

FIG. 4 is a cross-sectional view of the image stabilizer 240 of FIG. 3 taken along line A-B.

The actuator 320, the lens arrangement 330, and the image sensor 230 may be coupled to or seated in the housing 310. The image sensor 230 may be disposed in an area corresponding to the lens arrangement 330 in the housing 310.

The carrier 321 may be coupled to the lens arrangement 330 and may move the lens arrangement 330 in the Z-axis direction by the movement of the actuator 320. The lens arrangement 330 includes an optical axis connecting the center to the focal point of the lens, and the optical axis may be parallel to the Z-axis. In various embodiments, the lens arrangement 330 includes an optical axis connecting the center to the focal point of the lens, and the optical axis may extend in the Z-axis direction.

With reference to the carrier 321, the first magnet 323 may be coupled to a first side surface (the -X-axis direction) of the carrier 321, and the lens arrangement 330 may be coupled to a second side surface (the X-axis direction) of the carrier 321.

With reference to the carrier 321, the first side surface may be in the -X-axis direction of the carrier 321, and the second side surface may be in the X-axis direction of the carrier 321.

In an embodiment, with reference to the carrier 321, the first magnet 323 may be coupled to the carrier 321 in the direction of the housing 310, and the lens arrangement 330 may be coupled to the carrier 323 in the direction of the opening 325.

With reference to the carrier 321, the stopper 322 may be disposed on the top surface (the Z-axis direction) of the carrier 321, and the intermediate guide 411 and/or an auto-focus (AF) carrier 412 may be disposed on the bottom surface (the -Z-axis direction) of the carrier 321.

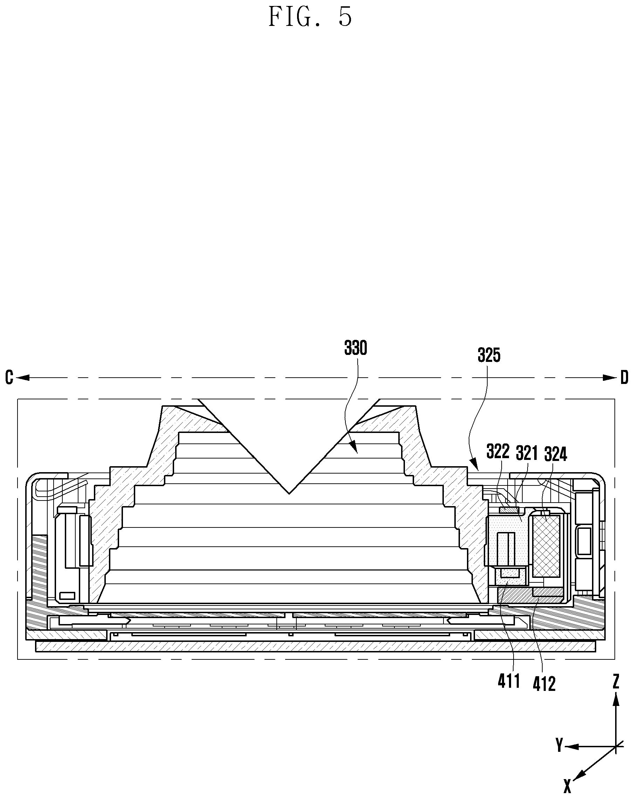

FIG. 5 is a cross-sectional view of the image stabilizer 240 of FIG. 3 taken along line C-D.

With reference to the carrier 321, the second magnet 324 may be coupled to a third side surface (the -Y-axis direction) of the carrier 321, and the lens arrangement 330 may be coupled to a fourth side surface (the Y-axis direction) of the carrier 321.

With reference to the carrier 321, the third side surface may be in the -Y-axis direction of the carrier 321, and the fourth side surface may be in the Y-axis direction of the carrier 321.

In an embodiment, with reference to the carrier 321, the second magnet 324 may be coupled to the carrier 321 in the direction of the housing 310, and the lens arrangement 330 may be coupled to the carrier 323 in the direction of the opening 325.

With reference to the carrier 321, the stopper 322 may be disposed on the top surface (the Z-axis direction) of the carrier 321, and the intermediate guide 411 and/or an auto-focus (AF) carrier 412 may be disposed on the bottom surface (the -Z-axis direction) of the carrier 321. The AF carrier 412 may be disposed below the intermediate guide 411 and may at least partially cover the lens arrangement 330, the carrier 321, and/or the intermediate guide 411.

Referring to FIGS. 3 to 5, in the actuator 320, in order to move the carrier 321, the intermediate guide 411, and/or the AF carrier 412, a ball guide rail may be disposed between the carrier 321 and the intermediate guide 411, and a ball guide rail may be disposed between the intermediate guide 411 and the AF carrier 412.

Referring to FIGS. 3 to 5, the actuator 320 moves in the first direction (the X-axis direction) when moved by the first magnet 323 and a coil included in the housing 310 and/or the carrier 321. When the actuator 320 moves in the first direction (the X-axis direction), the carrier 321 may move in the first direction (the X-axis direction) between the stopper 322 and the intermediate guide 411 with a constant interval with respect to the stopper and the intermediate guide. The carrier 321 may move along the ball guide rail disposed between the carrier 321 and the intermediate guide 411. When the carrier 321 moves, the carrier 321 is spatially restricted by the stopper 322 and the intermediate guide 411.

Referring to FIGS. 3 to 5, the actuator 320 moves in the second direction (the Y-axis direction) when moved by the second magnet 324 and a coil included in the housing 310 and/or the carrier 321. When the actuator 320 moves in the second direction (the Y-axis direction), the intermediate guide 411 and the carrier 321 may move in the second direction (the Y-axis direction) between the stopper 322 and the AF carrier 412 with a constant interval with respect to the stopper and the intermediate guide. When the actuator 320 moves in the second direction (the Y-axis direction), the intermediate guide 411 and the carrier 321 may move together. The intermediate guide 411 and the carrier 321 may move along the ball guide rail disposed between the intermediate guide 411 and the AF carrier 412. When the intermediate guide 411 and the carrier 321 move, the intermediate guide 411 and the carrier 321 are spatially restricted by the stopper 322 and the AF carrier 412. The first direction (the X-axis direction) and the second direction (the Y-axis direction) may be orthogonal to each other.

In an embodiment, the driving direction of the actuator 320 may be changed. For example, the positions of the first magnet 323 and the second magnet 324 may be interchanged. When the positions of the first magnet 323 and the second magnet 324 are interchanged, the actuator 320 may move in the second direction (the Y-axis direction) when moved by the first magnet 323 and the coil included in the housing 310 and/or the carrier 321. When the actuator 320 moves in the second direction (the Y-axis direction), the carrier 321 may move in the second direction (the Y-axis direction) between the stopper 322 and the intermediate guide 411 with a constant interval with respect to the stopper and the intermediate guide. The carrier 321 may move along the ball guide rail disposed between the carrier 321 and the intermediate guide 411. When the carrier 321 moves, the carrier 321 is spatially restricted by the stopper 322 and the intermediate guide 411. When the positions of the first magnet 323 and the second magnet 324 are interchanged, the actuator 320 may move in the first direction (the X-axis direction) when moved by the second magnet 323 and the coil included in the housing 310 and/or the carrier 321. When the actuator 320 moves in the first direction (the X-axis direction), the intermediate guide 411 and the carrier 321 may move in the first direction (the X-axis direction) between the stopper 322 and the AF carrier 412 with a constant interval with respect to the stopper and the intermediate guide. When the actuator 320 moves in the first direction (the X-axis direction), the intermediate guide 411 and the carrier 321 may move together. The intermediate guide 411 and the carrier 321 may move along the ball guide rail disposed between the intermediate guide 411 and the AF carrier 412. When the intermediate guide 411 and the carrier 321 are move, the intermediate guide 411 and the carrier 321 are spatially restricted by the stopper 322 and the AF carrier 412.

In an embodiment, the carrier 321, the stopper 322, the intermediate guide 411, and/or the AF carrier 412 may be constrained by a constant magnetic force.

Referring to FIGS. 3 to 5, in order to focus on a subject, the camera module 180 may adjust the focus position between the lens arrangement 330 and the image sensor 230 by moving the actuator 320 in the Z-axis direction.

In an embodiment, in order to focus on a subject, the actuator 320 may adjust the focus position between the lens arrangement 330 and the image sensor 230 by moving the first magnet 323 and/or the second magnet 324 in the Z-axis direction. When moving in the Z-axis direction, the first magnet 323 and/or the second magnet 324 may at least partially overlap the AF carrier 412.

For example, during an operation of capturing a closeup photograph of a subject, the electronic device 101 may move the lens arrangement 330 and/or the actuator 320 away from the image sensor 230 to adjust the focus position relative to the subject.

During an operation of capturing a long-distance photograph of a subject, the electronic device 101 may move the lens arrangement 330 and/or the actuator 320 toward the image sensor 230 to adjust the focus position relative to the subject.

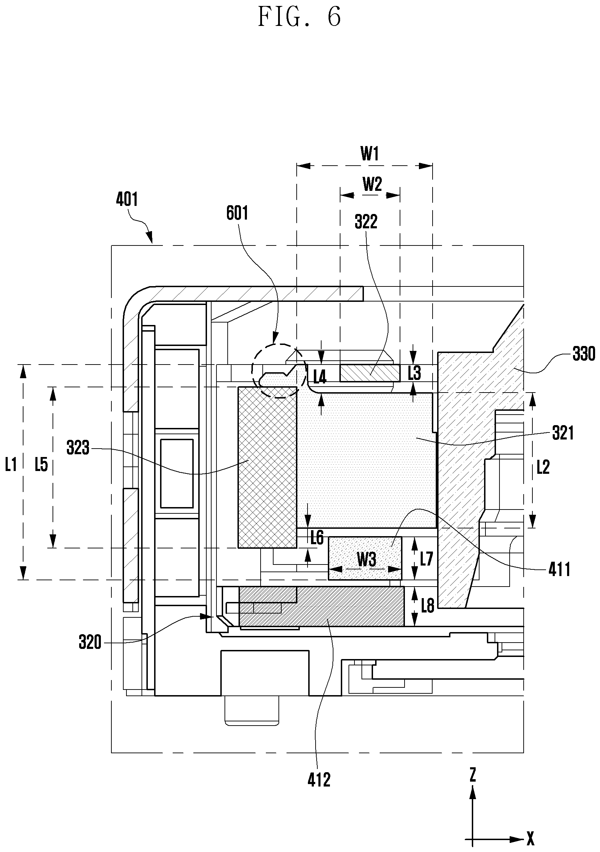

FIG. 6 is a view illustrating the area 401 in FIG. 4 according to an embodiment of the disclosure.

The carrier 321, the stopper 322, and the intermediate guide 411 may have lengths that provide a first height L1 in the Z-axis direction.

The lens arrangement 330 may be disposed on one side of the carrier 321, and the first magnet 323 and/or the second magnet 324 may be disposed on the other side. The one side on which the lens arrangement 330 is disposed and the other side on which the first magnet 323 and/or the second magnet 324 is disposed may be parallel to each other.

In the actuator 320, the stopper 322, the carrier 321, and the intermediate guide 411 may be disposed in that order in the Z-axis direction.

The carrier 321 may be disposed between the stopper 322 and the intermediate guide 411 to be spaced apart from the stopper and the intermediate guide.

The carrier 321 may have a second height L2 in the Z-axis direction and a first width W1 in the X-axis direction.

The stopper 322 may have a third height L3 in the Z-axis direction and a second width W2 in the X-axis direction. The stopper 322 may be disposed at the upper end of the carrier 321.

The carrier 321 may include a wing portion 601 having a fourth height L4. The wing portion 601 may be disposed in an area adjacent to the stopper 322 to protrude from the carrier 321 toward the housing 310. The fourth height L4 of the wing portion 601 may be longer than the third height L3 of the stopper 322. The first width W1 of the carrier 321 may be longer than the second width W2 of the stopper 322. The stopper 322 may be disposed between the wing portion 601 and the lens arrangement 330.

The carrier 321 and the stopper 322 may be disposed to overlap each other in at least a portion of the actuator 320.

The wing portion 601 may support the first magnet 323 having a fifth height L5 in the Z-axis direction to be coupled to the carrier 321.

The first magnet 323 may protrude from the carrier 321 by a sixth height L6 in the Z-axis direction, and the first magnet 323 may overlap the intermediate guide 411 in at least a partial area of the actuator 320. The first magnet 323 may be disposed on a side surface of the carrier 321.

The intermediate guide 411 may have a seventh height L7 in the Z-axis direction and a third width W3 in the X-axis direction. The intermediate guide 411 may be disposed at the lower end of the carrier 321. The intermediate guide 411 may overlap, in the X-axis direction, the first magnet 323 protruding from the carrier 321 by a sixth height L6 in the Z-axis direction. The actuator 320 may overlap the intermediate guide 411 in at least a partial area in the Z-axis direction.

The AF carrier 412 may have an eighth height L8 in the Z-axis direction. The intermediate guide 411 may be disposed at the upper end of the AF carrier 412. When the first magnet 323 moves according to the movement of the carrier 321, the AF carrier 412 may overlap the first magnet 323 in at least a partial area.

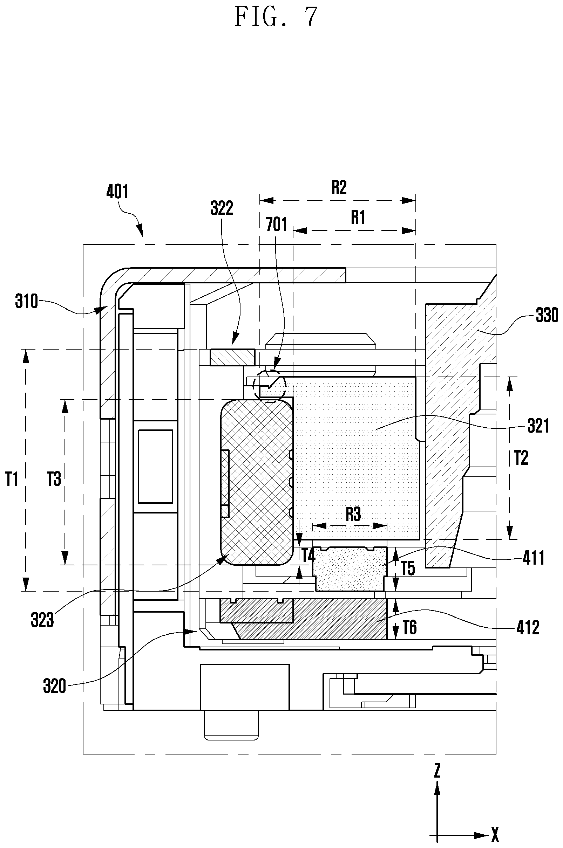

FIG. 7 is a view illustrating the area 401 in FIG. 4 according to an embodiment of the disclosure.

The carrier 321, the stopper 322, and the intermediate guide 411 may have lengths that provide a ninth height T1 in the Z-axis direction.

The lens arrangement 330 may be disposed on one side of the carrier 321, and the housing 310 may be disposed on the other side.

In the actuator 320, the stopper 322, the carrier 321, and the intermediate guide 411 may be disposed in that order in the Z-axis direction.

The carrier 321 may be disposed between the stopper 322 and the intermediate guide 411 to be spaced apart from the stopper and the intermediate guide.

The carrier 321 may have a tenth height T2 in the Z-axis direction and a fourth width R1 in the X-axis direction. The stopper 322 may be disposed at the upper end of the carrier 321.

The carrier 321 may include a wing portion 701. The wing portion 701 may be disposed in an area adjacent to the stopper 322 to protrude from the carrier 321 toward the housing 310. The carrier 321 may have a fifth width R2 up to the wing portion 701. The carrier 321 may move together with the wing portion 701 during movement, and the carrier 321 and the stopper 322 may not overlap each other in the Z-axis direction. The stopper 322 may be disposed between the wing portion 701 and the housing 310.

The wing portion 701 may support the first magnet 323 having an eleventh height T3 in the Z-axis direction to be coupled to the carrier 321.

The first magnet 323 may protrude from the carrier 321 by a twelfth height T4 in the Z-axis direction, and the first magnet 323 may overlap the intermediate guide 411 in at least a partial area of the actuator 320. The first magnet 323 may be disposed on a side surface of the carrier 321.

The intermediate guide 411 may have a thirteenth height T5 in the Z-axis direction and a sixth width R3 in the X-axis direction. The intermediate guide 411 may be disposed at the lower end of the carrier 321. The intermediate guide 411 may overlap the first magnet 323 protruding from the carrier 321 by the twelfth height T4 in the Z-axis direction in at least a partial area of the actuator 320.

The AF carrier 412 may have a fourteenth height T6 in the Z-axis direction. The intermediate guide 411 may be disposed at the upper end of the AF carrier 412. When the first magnet 323 moves according to the movement of the carrier 321, the AF carrier 412 may overlap the first magnet 323 in at least a partial area.

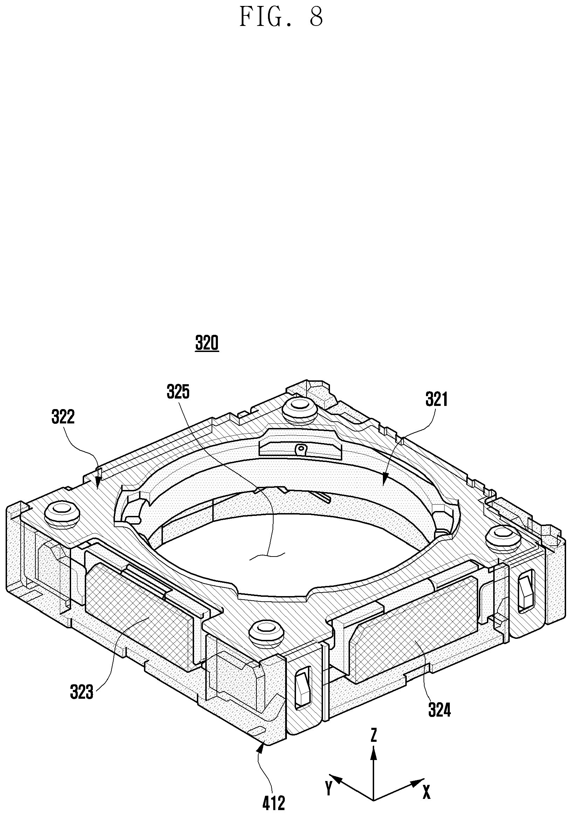

FIG. 8 is a perspective view illustrating the actuator 320 according to an embodiment of the disclosure.

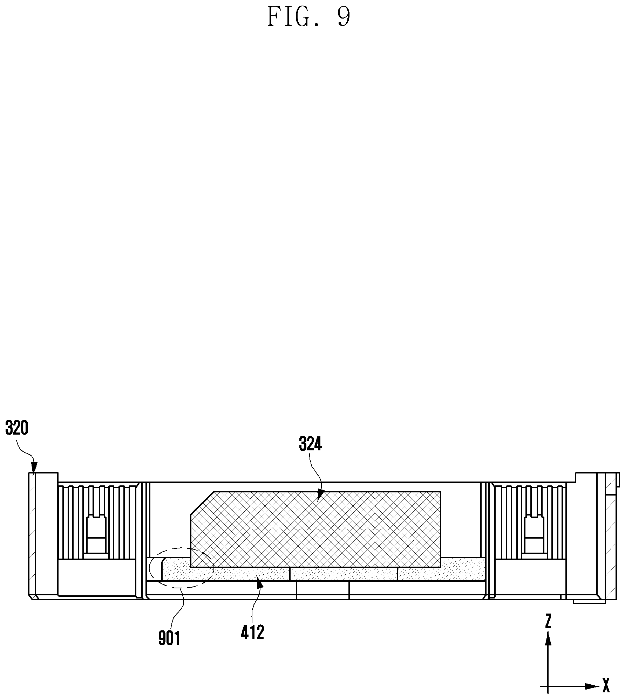

FIG. 9 is a view illustrating the second magnet 324 and the AF carrier 412 according to an embodiment of the disclosure.

Referring to FIGS. 8 and 9, the actuator 320 may include a carrier 321, a stopper 322, a first magnet 323 and/or a second magnet 324, and an AF carrier 412.

The carrier 321, the stopper 322, and the AF carrier 412 may include an opening 325 into which the lens arrangement 330 may be seated.

The first magnet 323 and/or the second magnet 324 may be coupled to at least a portion of the carrier 321.

The stopper 322 may prevent the carrier 321 from breaking away from the actuator by restricting rotation and/or movement when the carrier 321 moves.

When the second magnet 324 moves in the Z-axis direction, the second magnet 324 may overlap the AF carrier 412 in at least a partial area 901.

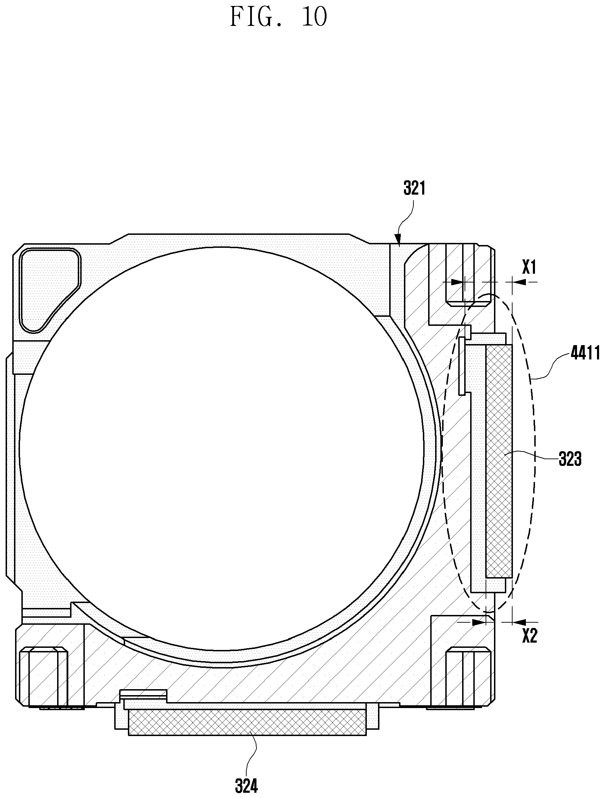

FIG. 10 is a view illustrating the carrier 321 and the intermediate guide 441 according to an embodiment of the disclosure.

When the actuator 320 moves in the first direction (the X-axis direction), the carrier 321 may move in the first direction (the X-axis direction) between the stopper 322 and the intermediate guide 411 with a constant interval with respect to the stopper and the intermediate guide.

When the actuator 320 moves in the first direction (X-axis direction), the carrier 321 may move, but the intermediate guide 411 may support the carrier 321. The intermediate guide 411 may provide a step in at least a partial area 4411. The step may have a first length x 1 to facilitate the movement of the carrier 321. The second magnet 324 coupled to the carrier 321 may have a second length x2. The second length x2 may be smaller than the step length (the first length x1) provided in at least a partial area 4411 of the intermediate guide 411.

When the actuator 320 moves in the second direction (the Y-axis direction), the intermediate guide 411 and the carrier 321 may move in the second direction (the Y-axis direction) between the stopper 322 and the AF carrier 412 with a constant interval with respect to the stopper and the intermediate guide.

The electronic device according to various embodiments disclosed herein may be one of various types of electronic devices. The electronic devices may include, for example, a portable communication device (e.g., a smart phone), a computer device, a portable multimedia device, a portable medical device, a camera, a wearable device, or a home appliance. The electronic device according to embodiments of the disclosure is not limited to those described above.

It should be appreciated that various embodiments of the disclosure and the terms used therein are not intended to limit the technological features set forth herein to particular embodiments and include various changes, equivalents, or alternatives for a corresponding embodiment. With regard to the description of the drawings, similar reference numerals may be used to designate similar or relevant elements. A singular form of a noun corresponding to an item may include one or more of the items, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "a first", "a second", "the first", and "the second" may be used to simply distinguish a corresponding element from another, and does not limit the elements in other aspect (e.g., importance or order). It is to be understood that if an element (e.g., a first element) is referred to, with or without the term "operatively" or "communicatively", as "coupled with/to" or "connected with/to" another element (e.g., a second element), it means that the element may be coupled/connected with/to the other element directly (e.g., wiredly), wirelessly, or via a third element.

As used herein, the term "module" may include a unit implemented in hardware, software, or firmware, and may be interchangeably used with other terms, for example, "logic," "logic block," "component," or "circuit". The "module" may be a minimum unit of a single integrated component adapted to perform one or more functions, or a part thereof. For example, according to an embodiment, the "module" may be implemented in the form of an application-specific integrated circuit (ASIC).

Various embodiments as set forth herein may be implemented as software (e.g., the program 140) including one or more instructions that are stored in a storage medium (e.g., the internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., Play StoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each element (e.g., a module or a program) of the above-described elements may include a single entity or multiple entities, and some of the multiple entities may be separately disposed in any other element. According to various embodiments, one or more of the above-described elements may be omitted, or one or more other elements may be added. Alternatively or additionally, a plurality of elements (e.g., modules or programs) may be integrated into a single element. In such a case, according to various embodiments, the integrated element may still perform one or more functions of each of the plurality of elements in the same or similar manner as they are performed by a corresponding one of the plurality of elements before the integration. According to various embodiments, operations performed by the module, the program, or another element may be carried out sequentially, in parallel, repeatedly, or heuristically, or one or more of the operations may be executed in a different order or omitted, or one or more other operations may be added.

## Claims

1. An electronic device comprising:
a camera module; and
an image stabilizer configured to compensate for shaking of the camera module,
wherein the image stabilizer comprises:
a lens arrangement including at least one lens;
an actuator configured to drive the lens arrangement in a first direction and in a second direction orthogonal to the first direction; and
a housing in which the actuator is seated,
wherein the actuator comprises:
a carrier coupled to the lens arrangement;
a stopper configured to limit movement of the carrier in a third direction orthogonal to the first direction and the second direction; and
an intermediate guide configured to limit the movement of the carrier together with the stopper when the actuator moves in the first direction, and to move together with the carrier when the actuator moves in the second direction, and
wherein, in the actuator, the stopper, the carrier, and the intermediate guide are disposed in that order in the third direction, and the stopper, the carrier, and the intermediate guide are disposed to at least partially overlap each other.

2. The electronic device of claim 1, wherein the carrier has a first side surface to which the lens arrangement is coupled, and a second side surface which is parallel to the first side surface and to which a first magnet and/or a second magnet is coupled, and
wherein the first magnet and/or the second magnet is disposed to overlap at least a portion of the intermediate guide in the third direction.

3. The electronic device of claim 2, wherein the carrier further comprises a wing portion that supports the first magnet and/or the second magnet, and
wherein the wing portion protrudes toward the stopper and/or the housing.

4. The electronic device of claim 2, further comprising an auto-focus (AF) carrier that at least partially surround the lens arrangement, the carrier, and/or the intermediate guide and is disposed below the intermediate guide,
wherein the first magnet and/or the second magnet at least partially overlaps the AF carrier by movement.

5. The electronic device of claim 1, wherein the actuator comprises an intermediate guide configured to restrict movement of the carrier together with the stopper when the actuator moves in the first direction, and to move together with the carrier when the actuator moves in the second direction.

6. The electronic device of claim 1, wherein the intermediate guide comprises:
an area in which a step is provided for movement of the carrier in the first direction and at least partially overlaps the carrier; and
an area that does not overlap the carrier in the second direction.

7. The electronic device of claim 1, wherein, in the actuator, with reference to the third direction, the stopper is disposed on an upper end of the carrier and the intermediate guide is disposed on a lower end of the carrier.

8. The electronic device of claim 7, wherein the carrier is spaced apart from the stopper and/or the intermediate guide at a predetermined interval with reference to the third direction.

9. The electronic device of claim 7, wherein the carrier has a first width, and
wherein the stopper has a second width smaller than the first width, and is disposed between the wing portion and the lens arrangement.

10. The electronic device of claim 7, wherein the stopper is disposed between the wing portion and the housing.

11. An image stabilizer comprising:
a lens arrangement including at least one lens;
an actuator configured to drive the lens arrangement in a first direction and in a second direction orthogonal to the first direction; and
a housing in which the actuator is seated,
wherein the actuator comprises:
a carrier coupled to the lens arrangement;
a stopper configured to limit movement of the carrier in a third direction orthogonal to the first direction and the second direction; and
an intermediate guide configured to limit the movement of the carrier together with the stopper when the actuator moves in the first direction, and to move together with the carrier when the actuator moves in the second direction, and
wherein, in the actuator, the stopper, the carrier, and the intermediate guide are disposed in that order in the third direction, and the stopper, the carrier, and the intermediate guide are disposed to at least partially overlap each other.

12. The image stabilizer of claim 11, further comprising an auto-focus (AF) carrier that at least partially surrounds the lens arrangement, the carrier, and/or the intermediate guide and is disposed below the intermediate guide,
wherein the carrier comprises a wing portion protruding toward the stopper and/or the housing and supporting the first magnet and/or the second magnet, and
wherein the carrier has a first side surface to which the lens arrangement is coupled, and a second side surface which is parallel to the first side surface and to which a first magnet and/or a second magnet is coupled, and the first magnet and/or the second magnet is disposed to overlap at least a portion of the intermediate guide in the third direction.

13. The image stabilizer of claim 11, wherein the actuator comprises an intermediate guide configured to restrict movement of the carrier together with the stopper when the actuator moves in the first direction, and to move together with the carrier when the actuator moves in the second direction, with reference to the third direction, the stopper is disposed on an upper end of the carrier and the intermediate guide is disposed on a lower end of the carrier, and
wherein the carrier is spaced apart from the stopper and/or the intermediate guide at a predetermined interval with reference to the third direction.

14. The image stabilizer of claim 11, wherein the intermediate guide comprises an area in which a step is provided for movement of the carrier in the first direction and at least partially overlaps the carrier, and an area that does not overlap the carrier in the second direction.

15. The image stabilizer of claim 11, wherein the carrier has a first width, and
wherein the stopper has a second width smaller than the first width, is disposed between the wing portion and the lens arrangement and between the wing portion and the lens arrangement.
